# EUROPÄISCHE PATENTSCHRIFT

(11) **EP 2 684 028 B1**
(45) Veröffentlichungstag und Bekanntmachung des Hinweises auf die Patenterteilung: **14.10.2020**
(21) Anmeldenummer: 12712230.7
(22) Anmeldetag: 12.03.2012
(51) Int. Cl.: G01N 21/03

(54) **VORRICHTUNG FÜR DIE ANALYSE EINER KLEINEN FLÜSSIGKEITSMENGE**
DEVICE FOR THE ANALYSIS OF A SMALL QUANTITY OF LIQUID.
DISPOSITIF POUR L'ANALYSE D'UNE PETITE QUANTITÉ D' UN LIQUIDE

(30) Priorität: 11.03.2011 DE 102011005432
(43) Veröffentlichungstag der Anmeldung: 15.01.2014
(73) Patentinhaber: Hellma GmbH & Co. KG, 79379 Müllheim (DE); Sahiri, Thomas, Calabasas, CA 91302 (US)
(72) Erfinder: SAHIRI, Thomas, Calabasas CA 91302 (US); GREIFFENREICH, Stefanie, 89429 Bachhagel (DE); KÄNDLER, Holm, 79424 Auggen (DE); KOLTUNSKI, Christof, 66123 Saarbrücken (DE)
(74) Vertreter: Hoffmann Eitle
(86) Internationale Anmeldenummer: PCT/EP2012/054238
(87) Internationale Veröffentlichungsnummer: WO 2012/123395

(56) Entgegenhaltungen:
- US-A1- 2002 185 608
- US-B1- 6 490 034
- US-B2- 7 202 945

## Beschreibung

### EINLEITUNG

Die Erfindung betrifft eine Vorrichtung für die Analyse, Fluoreszenzmessung, Luminiszenzmessung, Phosphoreszenzmessung, Messung der Raman-Streuung oder Absorptionsmessung an einer kleinen Menge, beispielsweise an einem Tropfen, einer flüssigen Probe mit Hilfe von Licht, das durch die Probe geführt ist und danach gemäß der vorgenannten Messmethoden detektierbar oder analysierbar ist, wobei die Vorrichtung eine in Gebrauchsstellung obere flächige Aufnahmestelle zum Aufbringen oder Auftropfen der Probe, einen in Gebrauchsstellung horizontal orientierten, unterhalb der Aufnahmestelle befindlichen Lichteintritt in ihr Gehäuse und eine im Strahlengang hinter dem Lichteintritt befindliche erste Einrichtung zur Umlenkung des Lichts nach oben zu der Aufnahmestelle ausweist, sowie eine zweite Lichtumlenkung, die den von unten kommenden Lichtstrahl in die zu analysierende Probe hinein lenkt.

### STAND DER TECHNIK

Eine ähnliche Vorrichtung ist in dem deutschen Patent DE 10 2004 023 178 B4 beschrieben und hat sich als universelles Zubehör für Absorptionsmessungen in der Praxis bewährt. Es hat sich aber insbesondere gezeigt, dass bei Fluoreszenzmessungen durch die direkte Umlenkung des Anregungslichts in Richtung des Detektors mittels des lösbar anbringbaren Reflektors ein Überstrahlen des Detektors mit einer zu großen Lichtmenge erzeugt wird. Der Detektor kann hierdurch in die Sättigung kommen und gegebenenfalls beschädigt werden. Zumindest ist die Anregungsstrahlung von der in der Intensität wesentlich schwächeren Fluoreszenzstrahlung nicht unterscheidbar und eine Auswertung des Messsignals daher nicht möglich.

Die aus dem deutschen Patent DE 10 2005 036 898 B4 bekannte ähnliche Lösung hat sich ebenfalls bewährt, da sich die Verfügbarkeit einer geringeren Bauhöhe für die universelle Einsetzbarkeit als Zubehör als kritischer Erfolgsfaktor herausgestellt hat. Allerdings treten bei Fluoreszenzmessungen die gleichen unerwünschten Effekte auf, wie zuvor dargestellt.

Aus der EP 0 660 106 A1 ist eine Vorrichtung bekannt, die es ermöglicht, mit einem üblichen Spektralfotometer, welches einen Aufnahmeschacht zum Einstecken einer Messküvette hat, Messungen in größeren Entfernungen durchzuführen. Die Vorrichtung hat dazu die Außenabmessungen einer solchen Küvette und passt somit in den Aufnahmeschacht des Spektralfotometers. In der Vorrichtung sind Lichtumlenkungen in Form von Prismen oder Spiegeln vorgesehen, wodurch zunächst das einfallende Licht zu einem ersten Lichtleiter umgelenkt wird, der zu einer entfernten Messstelle an einer Sonde führt. Über einen zweiten Lichtleiter wird das Licht wieder zurückgeführt und in der Vorrichtung durch eine zweite Umlenkung in Form eines Prismas oder eines Spiegels zu der Stelle gelenkt, an der bei einer Messküvette das durch diese hindurchgeführte Licht zu einem Detektor hin austritt.

In handelsüblichen Fluorimetern und Spektralfluorimetern sowie den für die Aufnahme und Halterung der zu untersuchenden flüssigen Proben verwendeten Fluoreszenzküvetten hat sich für die Entkopplung von Anregungsstrahlung und Emissionsstrahlung einer fluoreszierenden Probe ein Winkel von 90° etabliert, wobei prinzipiell auch alle anderen Winkel geeignet wären, welche die numerische Apertur von Anregungsstrahlung und Emissionsstrahlung voneinander entkoppeln. Nachteilig sind dabei die notwendig einzusetzenden Probenmengen von etwa mindestens 20µL bis hin zu einem oder mehr Millilitern.

In US 7,397,036 B2 ist eine Variante der 90°-Anordnung von Anregungsstrahlung und empfangener Emissionsstrahlung beschrieben, die eine fluorimetrische Analyse von geringen Probenmengen von etwa 2µL ermöglicht, wobei die zu analysierende Probe in einer speziellen Probenaufnahmevorrichtung als Flüssigkeitssäule allein durch die Oberflächenspannung zwischen zwei Stempeln gehalten wird. Das untersuchte Probenvolumen hängt von der Pipettiergenauigkeit ab beziehungsweise von der in der Flüssigkeitssäule verbliebenen Probenmenge, die durch ihre jeweilige Oberflächenspannung bedingt wird. Ein Messen von üblichen Proben auf organischer Basis ist daher weitgehend ausgeschlossen. Durch die offene Anordnung der Probenaufnahmeeinrichtung ist der erforderliche Schutz vor Falschlicht nicht ausreichend gewährleistet. Die US 6,490,034 offenbart eine Vorrichtung gemäß den Oberbegriffen der Ansprüche 1 und 5.

### Darstellung der Erfindung

Es besteht deshalb die Aufgabe, eine universell einsetzbare Vorrichtung der eingangs beschriebenen Art zu schaffen, bei welcher deren Vorteile, kleine, im Volumen genau definierte Probenmengen einer flüssigen Probe auch mit geringer Oberflächenspannung auf einfache Weise an einer Messstelle zu platzieren und nach der Messung eine zuverlässige und einfache Reinigung durchführen zu können, gleichermaßen bei großer und bei geringer Bauhöhe erhalten bleiben, aber nun eine Fluoreszenzmessung mit ausreichender Unterscheidbarkeit von Anregungsstrahlung und Emissionsstrahlung möglich ist.

Diese Aufgabe wird mit einer Vorrichtung für die Analyse, Fluoreszenzmessung, Luminiszenzmessung, Phosphoreszenzmessung, Messung der Raman-Streuung oder Absorptionsmessung an einer kleinen Menge einer flüssigen Probe mit den Merkmalen der Ansprüche 1 und 5 gelöst. Vorteilhafte Weiterbildungen der Erfindung sind in den Unteransprüchen definiert.

Zur Lösung dieser Aufgabe ist bei der eingangs definierten Vorrichtung eine im Strahlengang hinter dem Lichteintritt befindliche erste Einrichtung zur Umlenkung des Lichts (Lichtumlenkung) nach oben an eine Position seitlich zu der Aufnahmestelle sowie eine zweite Lichtumlenkung vorgesehen, die den von unten kommenden Lichtstrahl in die zu analysierende Probe hinein (zur Aufnahmestelle) lenkt. Dabei kann die zweite Umlenkung im Bereich der Probenhalterung seitlich angeordnet sein und dabei das Licht unter einem geeigneten Winkel in die flüssige Probe lenken, so dass kein Anteil der Anregungsstrahlung in Richtung des Detektors gelenkt wird, Emissionsstrahlengang und Anregungsstrahlengang also voneinander getrennt sind. Hierbei ist, anders als bei der eingangs definierten Vorrichtung, nicht nur die dem Detektor zugewendete Seite der Probenaufnahmestelle lichtdurchlässig gestaltet, sondern auch deren seitliche Begrenzungen, wobei der Begriff lichtdurchlässig auf die verwendete Anregungs- und Signalstrahlung bezogen ist.

Um die Verluste beim Transport innerhalb der Vorrichtung zu minimieren, ist es vorteilhaft die zweite Lichtumlenkung in die seitlichen Begrenzungen der Probenhalterung zu integrieren, so dass diese geeignet ist, das Anregungslicht zur Anregung von Fluoreszenz horizontal in die Probe (zur Aufnahmestelle) zu lenken. Entsprechend wird bei horizontaler Anregung die Fluoreszenz unter 90° in vertikaler Richtung nach oben und unten emittiert und ist dabei aufgrund der neben der Probenaufnahmestelle angeordneten zweiten Lichtumlenkung senkrecht zur Anregungsstrahlung in der Probe und somit räumlich von ihr getrennt.

Wenn durch die Auslegung des ersten Licht umlenkenden Elements sowie durch die nachfolgende Strahlführung zur Aufnahmestelle sowie durch eine entsprechende Strahlführung von der Aufnahmestelle zurück in Richtung des Detektors die Strahlen im wesentlichen senkrecht verlaufen, kann die Bauhöhe der Vorrichtung in einer weiten Spanne beliebig variiert werden, da durch die zweite Lichtumlenkung keinerlei Beeinflussung der Funktion an der eigentlichen Messstelle, nämlich der näpfchenartig vertieften Probenaufnahmestelle, kommt.

Die Probenaufnahmestelle ist bevorzugt eine Vertiefung in der Probenhalterung. Diese Vertiefung kann flächig und horizontal ausgeprägt sein und ist umlaufend seitlich begrenzt. Es kommen dabei ebenso näpfchenförmige Vertiefungen mit schrägen Seitenwänden wie zylindrische Vertiefungen mit senkrechten Seitenwänden oder andere Formen der Probenaufnahmestelle in Betracht, so lange diese eine genaue Definition des Probenvolumens an der Aufnahmestelle erlauben.

Da es anwendungsspezifisch auch bei Fluoreszenzmessungen wichtig sein kann, das genaue Volumen der analysierten Probe zu kennen, ist die Aufnahmestelle bevorzugt nach oben abgeschlossen bzw. begrenzt. Diese Begrenzung kann durch einen Deckel bereitgestellt werden und bevorzugt bündig sein. Ebenfalls ist es möglich, dass die Aufnahmestelle von einem Reflektor mit horizontaler Reflexionsfläche für Fluoreszenz-Strahlung begrenzt wird, bevorzugt ebenfalls bündig. Der Reflektor kann auch in den Deckel integriert sein und so die Aufnahmestelle in der genannten Weise begrenzen. Dabei ist die in ihrer Größe bzw. ihrem Volumen hierdurch genau definierte Probenaufnahmestelle von besonderem Vorteil, da sich eine in allen Raumrichtungen geometrisch definierte Messkammer ergibt. So wird gewährleistet, dass einerseits organische Medien, die nur eine niedrige Oberflächenspannung haben, in der Messkammer verbleiben und gleichzeitig das Volumen klar definiert ist. Hierdurch entfällt auch die Abhängigkeit von der Pipettiergenauigkeit, da das untersuchte Volumen allein von der Geometrie der Messkammer abhängt.

Die Begrenzung der Probenaufnahmestelle kann wie bei einer Fluoreszenzküvette eckig ausgeführt werden, wobei es aber für die Reinigungsfähigkeit zu bevorzugen ist, die Begrenzung zylindrisch bzw. in Form eines nach unten zusammenlaufenden Kegelstumpfs auszuführen. Für die optische Funktion ist diese Formgebung unerheblich.

Der Reflektor ließe sich auch durch ein anderes, die Messkammer begrenzendes Element ersetzen, allerdings kann er den für die Messung erfassten Raumwinkel des Fluoreszenzlichts vergrößern und somit das Signal verstärken. Alternativ zu einem planen Reflektor ist alternativ auch ein transparentes, die Messkammer begrenzendes Element denkbar, das auf seiner Rückseite eine gewölbte beispielsweise eine sphärische reflektierende Fläche hat, die das emittierte Fluoreszenzlicht in Richtung des Detektors reflektiert.

Da sich der Reflektor bevorzugt in einem deckelartigen Element befindet, ist die Probenaufnahmestelle vor Falschlicht geschützt. Falschlicht kann das Ermitteln von genauen Messergebnissen verhindern, insbesondere bei schwachen Fluoreszenzsignalen.

Sämtliche die Messkammer begrenzenden Bauelemente sind vorteilhaft so auszulegen, dass die verwendeten Werkstoffe frei von Fluoreszenz sind und ihre Kanten und Oberflächen durch ihre Beschaffenheit keine Streuung erzeugen, die in Richtung des Detektors gelangen kann.

Die erste Lichtumlenkung kann in Form total reflektierender Prismen oder durch andere reflektierende Bauteile erfolgen beispielsweise durch metallbeschichtete Spiegel.

Die Lichtleitung von der ersten Umlenkung zur Aufnahmestelle hin kann vorteilhaft mit Lichtleitstäben, Lichtleitfasern mit großem Querschnitt oder Faserbündeln erfolgen. Bei einer gut kollimierten Anregungsstrahlung wie es beispielsweise bei einer Laserstrahlungsquelle vorstellbar ist, kann prinzipiell auf lichtleitende Komponenten verzichtet werden und die Anregungsstrahlung direkt von der ersten Umlenkung zur zweiten Umlenkung transportiert werden.

Die Lichtleitung von dem Boden der Aufnahmestelle zu der ersten Detektor-Lichtumlenkung, die das Licht in Richtung des Detektors umlenkt, funktioniert in entsprechender Weise. Aufgrund der Notwendigkeit von der eigentlichen Messstelle ein ausreichend starkes Lichtsignal in Richtung des Detektors zu lenken, dürfte die Lichtführung mittels lichtleitendender Komponenten in diesem Strang in der Praxis unverzichtbar sein.

Die erste Detektor-Lichtumlenkung kann wiederum ein totalreflektierendes Prisma oder eine andere reflektierende Komponente erfolgen. Es ist genauso denkbar, das Prisma beispielsweise in das Ende des genannten Lichtleitstabes zu integrieren, indem sein Ende mit einer unter einem Winkel angeordneten, reflektierenden Fläche versehen wird.

Wie bereits dargestellt, wurde in der vorliegenden Vorrichtung die eigentliche Messstelle in der für die Fluoreszenzmessung günstigen winkligen Anordnung von Anregungsstrahl und Emissionsstrahl in den Bereich der oberen Aufnahmestelle verlagert. Dadurch offenbart sich als wesentlicher Aspekt der beschriebenen Erfindung die Unabhängigkeit von der geräteseitigen Anordnung von Anregungsstrahlung und der notwendigen Ausrichtung der Emissionsstrahlung in Richtung des Detektors.

Einerseits ist es bevorzugt möglich, Fluoreszenzmessgeräte als Einsatzort für die Vorrichtung zu wählen. Hierbei ist bei marktüblichen Geräten die Anordnung von Anregungsstrahlung und die notwendige Ausrichtung der Emissionsstrahlung in Richtung des Detektors typischerweise unter einem Winkel von 90°, wobei andere Winkel denkbar wären.

Gleichermaßen ist es nun aber möglich einige Fotometer oder Spektralfotometer für die Fluoreszenzmessung zu nutzen, die eigentlich für Absorptionsmessungen beziehungsweise Transmissionsmessungen gedacht sind. Besonders naheliegend und universell einsetzbar sind dabei Geräte, die detektorseitig über einen Polychromator verfügen, sogenannte Diodenarray-Geräte, oder Geräte die über Spektralfilter den zu analysierenden Wellenlängenbereich selektieren können. Auf der Seite der Anregungsstrahlung kann dann durch den Einsatz einfacher Spektralfilter, die als Katalogware beispielsweise bei Edmund Optics preisgünstig verfügbar sind, am Ausgang des Lampenmoduls die Anregungswellenlänge bestimmt werden.

Neben der Möglichkeit Fluoreszenz zu messen, ergibt sich in einer baulichen Variante gemäß einer zweiten Ausführungsform der vorliegenden Erfindung die Möglichkeit, durch Verwendung zweier unterschiedlicher Umlenkelemente im Deckel auch Transmissionsmessungen durchzuführen.

Hierbei wird zunächst die zweite Umlenkung nicht in die seitlichen Begrenzungen der Aufnahmestelle integriert, sondern an jeweils geeigneter Stelle so vorgesehen, dass sie geeignet ist, das Anregungslicht weiter hin horizontal in die Probe zu lenken.

Für die Fluoreszenzmessung kann die zweite Umlenkeinrichtung nun zweckmäßig an einem Deckel angebracht werden. Sie lenkt aber weiterhin in gleicher Funktionsweise das von unten kommende Anregungslicht durch die lichtdurchlässigen seitlichen Begrenzungen der Aufnahmestelle auf die zu analysierende Probe.

Andererseits kann zusätzlich eine alternative zweite Lichtumlenkung zur Messung der Transmission vorgesehen sein, die geeignet ist, das Anregungslicht durch Mehrfach-Reflektion in die Aufnahmestelle und vertikal durch die Probe nach unten zu lenken. In anderen Worten wird nun nicht mehr horizontal, sondern vertikal angeregt, und ebenso vertikal die Strahlung zur Transmissionsmessung aus der Probe entnommen. Für derartige Transmissionsmessungen kommt beispielweise ein Dachkantprisma, ein Kegelstumpfprisma oder eine andere strahlumlenkende Komponente zum Einsatz, bei der die Strahlung durch Mehrfachumlenkung so auf die zu analysierende Probe umgelenkt wird, dass die Strahlung durch die Probe hindurch fällt und mit ihr wechselwirken kann, wobei die optische Achse der Anregungsstrahlung mit der optischen Achse der in Richtung des Detektors geführten Strahlung zusammenfällt.

Zweckmäßig sind beide zweite Umlenkungen gleichzeitig in einen oben auf die Probenhalterung aufsetzbaren Deckel integriert, so dass beispielsweise durch Drehen des Deckels um ein baulich festgelegtes Winkelmaß um seine Rotationsachse ein einfaches Umschalten von Transmissionsmessung zu Fluoreszenzmessung oder umgekehrt möglich ist.

Auf diese Weise ist es somit möglich Fluorimeter und Spektralfluorimeter außer für die Fluoreszenzmessung auch für die Transmissionsmessung zu nutzen.

Es besteht somit die Möglichkeit, wie bereits angesprochen einige Fotometer oder Spektralfotometer für die Fluoreszenzmessung zu nutzen, die eigentlich für Absorptionsmessungen beziehungsweise Transmissionsmessungen gedacht sind.

In einer dritten Ausführungsform kann die Erfindung gleichermaßen für die Messung von Transmission in einem Transmissionsmessgerät und von Fluoreszenz in einem Fluoreszenzmessgerät verwendet werden, wobei die Komponenten so angeordnet werden, ohne dass hierfür der Deckel gedreht wird. Hierbei ist die zweite Lichtumlenkung geeignet, das von der ersten Lichtumlenkung kommende Anregungslicht durch Mehrfach-Reflektion in die Aufnahmestelle und vertikal durch die Probe nach unten zu lenken, wobei eine seitliche Begrenzung der Probenhalterung, die diese in einer Richtung unter rechtem Winkel zur genannten Position begrenzt, als eine das Fluoreszenzlicht totalreflektierende Abschrägung der Probenhalterung ausgeführt ist.

Vorteilhaft hieran ist die Nutzung der jeweiligen Messgeräte für Transmissionsmessung beziehungsweise für Fluoreszenzmessungen ohne die geringste Notwendigkeit der Anpassung irgendeiner Messroutine oder Vorgehensweise. Bedingung ist allerdings das Vorhandensein beider Typen von Messgeräten.

Bei Aufbau eines Kombinationsgeräts gleichermaßen für Transmissionsmessung und Fluoreszenzmessung beispielsweise mit Hilfe einzelner Module, können in der Vorrichtung beide Messmodi gleichzeitig betrieben werden. Dies ist möglich durch die veränderte Anordnung der Komponenten für die Strahlumlenkung.

In einer vierten Ausführungsform der vorliegenden Erfindung ist neben der Aufnahmestelle in der Probenhalterung ferner eine dritte Lichtumlenkung integriert, die horizontal gegenüber der zweiten Lichtumlenkung angeordnet ist und geeignet ist, das von der zweiten Lichtumlenkung kommende, durch die Probe getretene Licht zur Messung der Transmission nach unten zu lenken. Dadurch ist die erfindungsgemäße Vorrichtung gleichermaßen für die Messung von Transmission in einem Transmissionsmessgerät und von Fluoreszenz in einem Fluoreszenzmessgerät geeignet, und es kann durch andere Gestaltung der Probeaufnahmestelle und der Integration der zweiten Strahlumlenkung in die lichtdurchlässigen seitlichen Begrenzungen der Probenaufnahmestelle auf entsprechende im Deckel angeordnete Komponenten verzichtet werden.

Die Probenaufnahmestelle kann dabei bevorzugt austauschbar gestaltet werden, um für die Transmissionsmessung unterschiedliche optische Schichtdicken verwenden zu können.

### Kurze Beschreibung der Zeichnungen

Figur 1A ist eine vertikale Schnittdarstellung einer ersten Ausführungsform die nicht zur vorliegenden Erfindung gehört; Figur 1B ist eine im Vergleich zu Figur 1A um 90° gedrehte vertikale Schnittdarstellung; Figur 1C ist eine horizontale Schnittdarstellung entlang der Linie A-A in Figur 1A;
Figur 2A zeigt eine vergrößerte Ansicht der eigentlichen Messstelle der Figur 1A; Figur 2B entspricht Figur 2A, bei der jedoch zusätzlich einige Lichtstrahlen zur Illustration der Lichtführung eingezeichnet sind;
Figur 3A ist eine horizontale Schnittdarstellung entlang der Linie A-A der Figur 1A mit der für Fluorimeter typischen Strahlanordnung von 90°; Figur 3B ist eine Figur 3A entsprechende alternative Schnittdarstellung mit der für Fotometer zur Transmissionsmessung typischen Strahlanordnung von 180°;
Figur 4A zeigt eine vergrößerte Ansicht der eigentlichen Messstelle bei einer zweiten Ausführungsform der Erfindung mit drehbarem Deckel, bei einer Deckelstellung für Fluoreszenzmessung; Figur 4B zeigt eine vergrößerte Ansicht der eigentlichen Messstelle der zweiten Ausführungsform bei einer Deckelstellung für Transmissionsmessung;
Figuren 5A und 5B sind horizontale Schnittdarstellungen entsprechend den Figuren 3A und 3B, jeweils mit für Fluorimeter typischer Strahlanordnung von 90° und mit für Fotometer für die Transmissionsmessung typischer Strahlanordnung von 180°;
Figur 6A zeigt eine vergrößerte Ansicht der eigentlichen Messstelle bei einer dritten Ausführungsform der Erfindung bei der Transmissionsmessung; Figur 6B zeigt eine vergrößerte Ansicht der eigentlichen Messstelle der dritten Ausführungsform bei der Fluoreszenzmessung; Figur 6C ist eine sinngemäß ausgeführte Schnittdarstellung entlang der Linie A-A der Figur 1A mit einem nicht drehbaren Deckel, wobei die Vorrichtung in ein jeweils anderes Gerät eingesetzt werden muss, um Transmissionsmessungen oder Fluoreszenzmessungen zu erlauben;
Figur 7A zeigt eine vergrößerte Ansicht der eigentlichen Messstelle bei einer vierten Ausführungsform der Erfindung die für Transmissionsmessung und Fluoreszenzmessung geeignet ist; Figur 7B ist eine sinngemäß ausgeführte Schnittdarstellung entlang der Linie A-A der Figur 1A mit einem nicht drehbaren Deckel, wobei die Vorrichtung ein jeweils anderes Gerät eingesetzt werden muss, um Transmissionsmessungen oder Fluoreszenzmessungen zu erlauben; und
Figuren 8A bis 8D zeigen Varianten der Probenhalter und Aufnahmestellen.

### Wege zur Ausführung der Erfindung

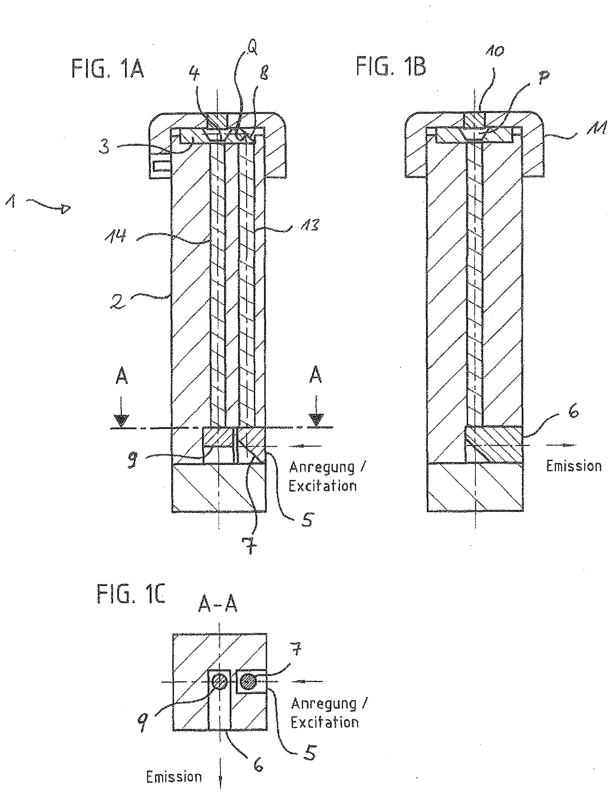

Figur 1A zeigt eine vertikale Schnittansicht einer ersten Ausführungsform der nicht zur Erfindung gehört und Figur 1B zeigt eine vertikale Schnittansicht, die im Vergleich zu Figur 1A um 90° um die eingezeichnete vertikale Achse gedreht ist. Die Analysevorrichtung 1 umfasst ein vertikal längliches Gehäuse mit quadratischem Querschnitt (vergleiche Figur 1C), welches an seiner Oberseite eine Probehalterung 3 mit einer näpfchenartigen Vertiefung 4 zur Aufnahme einer kleinen Menge einer flüssigen Probe P, wie zum Beispiel einem Tropfen, aufweist, wobei die Größenordnung des aufgebrachten Volumens der Probe im Bereich von 10 µl oder weniger liegt. In dieser Ansicht sowie den entsprechenden Ansichten der im folgenden besprochenen Ausführungsformen ist die Analysevorrichtung 1 bereits in ihrer normalen Gebrauchsstellung gezeigt, bei der die flüssige Probe P von oben in die Probenaufnahme 4 eingeführt wird und dort durch Schwerkraft gehalten wird. Die Probenhalterung 3 besteht aus einem Material, das für das Anregungslicht und das in der Probe dadurch generierte Fluoreszenzsignal oder andere Signalarten wie Raman-Streuung transparent ist, vorliegend aus einem geeigneten Glas wie synthetischem Quarzglas. Es müssen allerdings nicht unbedingt sämtliche Begrenzungsflächen der Probenhalterung 3 auf diese Weise transparent sein, sondern lediglich diejenigen Flächen, welche vom Anregungslicht und dem zu messenden Signal durchquert werden.

Die Vorrichtung wird nach oben hin von einem Deckel 11 abgeschlossen, in weichem mittig über der Probenaufnahmestelle 4 ein Reflektor 10 eingesetzt ist, welcher die Probenaufnahme 4 nach oben hin begrenzt. Obwohl die in der vorliegenden Ausführungsform gezeigte Vorrichtung nach oben hin von einem Reflektor 10 begrenzt wird, ist es ebenso denkbar, die Probenaufnahmestelle 4 lediglich durch den Deckel 11 zu begrenzen, um so die sehr kleinen Probenvolumina genau definieren zu können. Der Reflektor 10 des vorliegenden Ausführungsbeispiels ragt dabei geringfügig in die Aufnahmestelle hinein, um so ein Auslaufen der flüssigen Probe im geschlossenen Zustand des Deckels 11 zu verhindern. Gleichwohl ist es möglich, den Reflektor mit der Oberseite der Probenhalterung 3 bündig zu gestalten, wobei gleiches für die alternative Ausgestaltungsmöglichkeit gilt, bei welcher die Probenaufnahmestelle 4 lediglich durch den Deckel 11 begrenzt wird.

Die Analysevorrichtung 1 ist dazu bestimmt, in eine Aufnahme eines herkömmlichen Spektralanalysegeräts eingesetzt zu werden, wobei als Analysegeräte Spektralfotometer, Fluorimeter, Raman-Spektrometer oder Absorptionsmessgeräte und dergleichen in Frage kommen, welche die Fluoreszenz, Luminiszenz, Phosphoreszenz, Raman-Streuung oder Absorption der flüssigen Probe P messen können. Zu diesem Zweck ist die Analysevorrichtung 1 in ihrem unterem Bereich, das heißt in Gebrauchsstellung unterhalb der Probenhalterung, mit einem horizontal orientierten Lichteintritt 5 für Anregungslicht versehen, der sich an einer geeigneten Position befindet, damit Anregungslicht aus den genannten Messgeräten bei eingesetzter Analysevorrichtung 1 durch die Lichteintrittsöffnung 5 eingekoppelt werden kann. Ebenso umfasst die Analysevorrichtung einen geeignet platzierten Lichtaustritt 6 zur Auskopplung des Signallichts an das Messgerät.

Im Strahlengang hinter dem Lichteintritt 5 ist als erste Umlenkeinrichtung des Lichts ein reflektierendes Prisma 7 vorgesehen, welches den Anregungslichtstrahl aus der Horizontalen in einen vertikal im Gehäuse 2 der Vorrichtung 1 vorgesehenen Lichtleiter 13, beispielsweise eine Lichtleitfaser, einkoppelt. Es ist ebenso möglich, anstatt reflektierender Prismen auch andere Lichtumlenkelemente wie Spiegel einzusetzen. Das Anregungslicht wird somit durch die Umlenkung bzw. Reflektion am Prisma 7 und - in dieser Ausführungsform - vom Lichtleiter 13 nach oben an eine Position seitlich zur Aufnahmestelle 4 geführt. Es ist aber ebenso möglich, auf einen Lichtleiter zu verzichten und den Anregungsstrahl durch beispielsweise ein hohles Gehäuseinneres an die Position neben der Aufnahmestelle 4 zu führen.

Weiter befindet sich im vorliegenden Ausführungsbeispiel, das nicht zur Erfindung gehört, über dem Ende des Lichtleiters an der Position seitlich zur Aufnahmestelle 4 als zweite Lichtumlenkung 8 eine in der Seitenwand der Probenhalterung 3 ausgebildete Abschrägung 8, welche den Anregungslichtstrahl durch totale Reflexion in die Horizontale zur Probe P in der Probenaufnahme 4 umlenkt (siehe Figur 1A). Das Anregungslicht erzeugt in der Probe P zum Beispiel Fluoreszenz, welche im Wesentlichen senkrecht (90°) zur Einfallsrichtung des Anregungslichts in der Probe P in einen engen Raumwinkel emittiert wird. In der vorliegenden Beschreibung wird Fluoreszenz lediglich als Beispiel für die Erzeugung von Emission verwendet, da sich vom Aufbau der Analysevorrichtung 1 her für die Analyse keine Unterschiede zu anderen Emissionsarten wie Luminiszenz, Phosphoreszenz oder Raman-Streuung ergeben, welche ebenfalls unter einem Winkel zur Richtung des Anregungslichts beobachtet werden, um die sehr schwachen Signale von der hohen Intensität des Anregungslichts trennen zu können. Es ist auch zu verstehen, das aus praktischen Gründen die Beobachtung bzw. Abführung des Emissionslichts vorliegend unter 90° zur Anregungsrichtung erfolgt, es aber vom Prinzip her ebenso möglich ist, andere Winkel zu verwenden, die eine ausreichende räumliche Trennung von Anregungslicht und Signallicht gewährleisten.

Ein Teil des genannten Fluoreszenzlichts wird nach oben abgestrahlt und durch den Reflektor 10 nach unten zurückreflektiert. Zusammen mit dem nach unten emittierten Anteil wird das Fluoreszenzlicht durch den Boden bzw. die untere flächige Begrenzung der Probenaufnahme 4 in einen zweiten Lichtleiter 14 eingekoppelt, welcher das Fluoreszenzlicht zu einer ebenfalls im unteren Bereich der Vorrichtung befindlichen Refiektionsprisma 9 als erster detektorseitiger Lichtumlenkung führt, die wiederum den Fluoreszenzlichtstrahl zu dem im Fluoreszenzmessgerät befindlichen Detektor umlenkt. Hierzu ist im Gehäuse 2 der Analysevorrichtung 1 eine Lichtaustrittsöffnung 6 vorgesehen, die ebenfalls horizontal orientiert ist und der Strahlführung von Fluoreszenzmessgeräten entsprechend unter einem Winkel von 90° zum Lichteintritt 5 angeordnet ist, wie aus Figuren 1B und 1C ersichtlich ist.

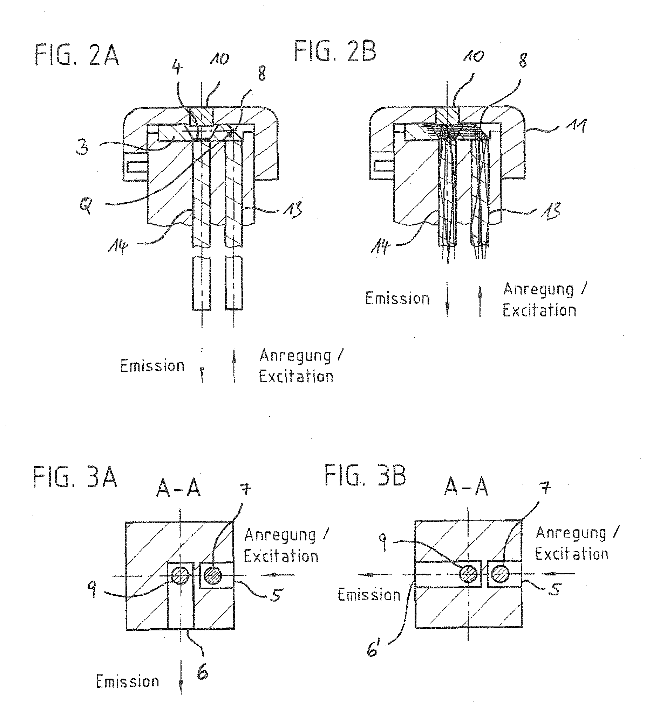

In den Figuren 2A und 2B ist der obere Bereich der Analysevorrichtung 1 noch einmal vergrößert dargestellt, wobei in Figur 2B beispielhafte Lichtstrahlen eingezeichnet sind, die als Anregungslicht durch den Lichtleiter 13 seitlich neben die Probenaufnahme 4 in die Probenhalterung 3 eingekoppelt werden, von der Abschrägung 8 als zweiter Lichtumlenkung total reflektiert werden und horizontal in die Probe P geführt werden. Die Fluoreszenzstrahlung (Emission) wird dann unter rechtem Winkel vom Lichtleiter 14 aus der Probenaufnahme 4 der Probenhalterung 3 nach unten weggeführt.

In Figur 3A ist nochmals eine der Figur 1C entsprechende Schnittdarstellung entlang der Linie A-A der Figur 1A dargestellt. Allerdings sieht die Erfindung alternativ vor, die Fluoreszenzemission anstatt unter rechtem Winkel zur Richtung der Anregungsstrahlung mit dieser fluchtend aus der Analysevorrichtung 1 auszukoppeln. Hierzu ist in der entsprechenden, in Figur 3B dargestellten Schnittdarstellung die Lichtaustrittsöffnung 6' in der der Lichteintrittsöffnung 5 gegenüberliegenden Seite der Analysevorrichtung 1 ausgebildet. Auf diese Weise ist es möglich, einige handelsübliche Fotometer oder Spektralfotometer, die eigentlich für die Absorptionsmessung ausgelegt sind, auch für die Messung von Fluoreszenz zu verwenden, da durch die in Figur 3B gezeigte Anordnung die Fluoreszenzstrahlung fluchtend mit der Anregungsstrahlung aus der Analysevorrichtung 1 ausgekoppelt und in das Fotometer bzw. Spektral-Fotometer entsprechend deren fluchtenden Anregungs- und Signalstrahlengängen eingekoppelt werden kann. Somit können Fluoreszenzmessungen unabhängig von der geräteseitigen Anordnung von Anregungsstrahlengang und Emissionsstrahlengang durchgeführt werden.

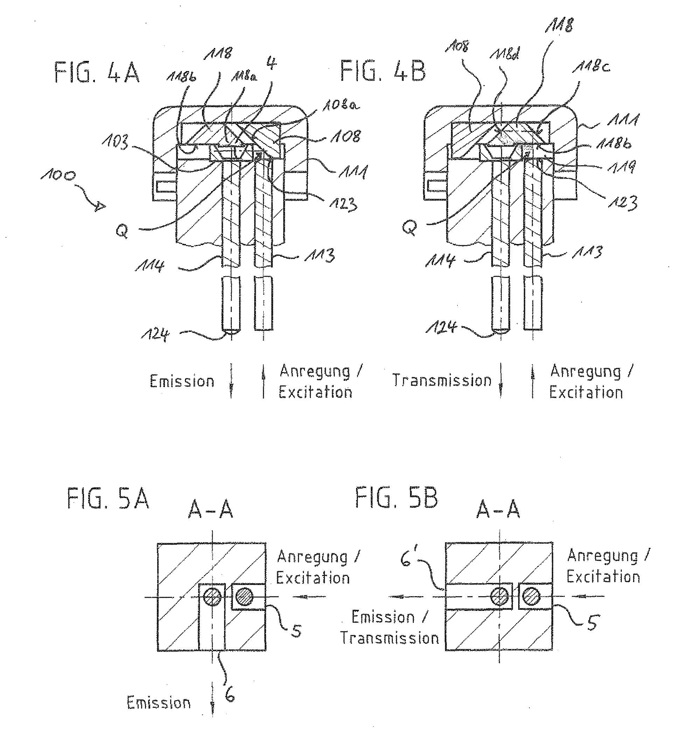

Die Figuren 4A und 4B zeigen eine zweite Ausführungsform der erfindungsgemäßen Analysevorrichtung, welche sowohl zur Messung von Fluoreszenz als auch zur Messung der Absorptionseigenschaften der flüssigen Probe P in der Probenaufnahmestelle 4 eingesetzt werden kann. Figur 4A zeigt dabei eine Detailansicht des oberen Teils der Analysevorrichtung 100, bei welcher die zweite Lichtumlenkung durch zwei alternativ einsetzbare optische Umlenkelemente 108 und 118 erreicht wird. Das eine Umlenkelement ist als extern reflektierendes Prisma 108 ausgestaltet, welches so seitlich und unterhalb im Deckel 111 der Vorrichtung 100 angebracht ist, dass es mit seiner Basis 108a über dem Lichtleiter 113 für das Anregungslicht angeordnet ist und den Anregungslichtstrahl um 90° umlenkt, um ihn horizontal in die Probe in der Probenaufnahme 4 einzuführen. Im Unterschied zur ersten Ausführungsform erstreckt sich dabei die Probenhalterung 103 nicht bis in den Bereich über den Lichtleiter 113 für das Anregungslicht, sondern das Licht tritt aus dem Lichtleiter 113 am Ende des Gehäuses 102 der Vorrichtung 100 aus, bevor es vom Reflektorprisma 108 in die Horizontale umgelenkt wird. Dabei ist zweckmäßigerweise das Ende des Lichtleiters 113 mit einer Linse bzw. linsenförmigen Oberfläche 123 versehen, um den Anregungslichtstrahl zu bündeln. Auf diese Weise wird entsprechend dem gleichen Prinzip der ersten Ausführungsform die in der Probenaufnahme 4 befindliche Probenflüssigkeit zur Fluoreszenzemission angeregt, wobei die emittierte Fluoreszenzstrahlung wie in der ersten Ausführungsform durch einen Lichtleiter 114 vertikal nach unten geführt wird, um im unteren Bereich der Vorrichtung 100 wieder durch die erste detektorseitige Lichtumlenkung 9 horizontal zu einem Detektor geführt zu werden. Wahlweise kann dabei auch am unteren Ende des Lichtleiters 114 eine Linse oder linsenartig gewölbte Oberfläche 124 ausgebildet sein.

Weiter ist unter dem Deckel 111 außermittig ein Dachkantprisma 118 angebracht, welches mit seiner breiteren Unterseite die Probenaufnahme 4 abschließt bzw. begrenzt. Zweckmäßigerweise ist dazu das Dachkantprisma 118 an seinem über der Probenaufnahme 4 befindlichen Teil 118a der Unterseite mit einem kleinen Vorsprung versehen, welcher einen Austritt der Probenflüssigkeit aus der näpfchenartigen Vertiefung 4 verhindert. (Der besseren Sichtbarkeit halber ist der Vorsprung nicht als sich bis zu den Rändern der Probenaufnahme erstreckend eingezeichnet.) Der in der Figur 4A sichtbare linke Teil 118b der Unterseite des Dachkantprismas 118 kommt dabei nicht auf der Probenaufnahme 4 zu liegen.

Wird nun der Deckel 111 um 180° gedreht (siehe Figur 4B, welche die gleiche, nicht um 90° gedrehte Schnittansicht wie die Figur 4A zeigt), so kommt der zuvor nicht über der Probenaufnahme 4 befindliche Teil 118b der Unterseite des Dachkantprismas 118 über dem die Anregungsstrahlung zuführenden Lichtleiter 113 zu liegen, so dass der aus dem Lichtleiter 113 austretende Lichtstrahl nach Durchquerung eines seitlich neben der Probenaufnahme 4 befindlichen kurzen Zwischenraums 119 durch die Fläche 118b in das Dachkantprisma 118 eintritt, von einer abgeschrägten Seite 118c des Prismas 118 in die Horizontale total reflektiert wird, dieses reflektierte Anregungslicht dann über der Probenaufnahme 4 von der anderen abgeschrägten Seite 118d des Dachkantprismas 118 vertikal nach unten reflektiert wird und somit vertikal in die Probenaufnahme 4 eintritt und durch die Probe P hindurch transmittiert wird. Das transmittierte Licht, das durch den Boden der Probenaufnahme 4 in den Lichtleiter 114 eintritt, enthält nun die Absorptionssignatur der Probe P und kann somit zur Bestimmung der Absorptionseigenschaften der Probe P ausgewertet werden. Anzumerken ist, dass die in den Figuren 4A und 4B gezeigten Anordnungen des Reflexionsprismas 108 und des Dachkantprismas 118 sowie deren Integration in den Deckel 111 lediglich als beispielhaft anzusehen sind, und dass ebenso andere Umlenkelemente, wie zum Beispiel jeweils ein Spiegel an den Positionen der Flächen 108a, 118c und 118d, vorgesehen werden können. Ebenfalls ist es möglich, die Anordnung dieser optischen Umlenkelemente auch unter anderen Winkelanordnungen zu treffen, so dass der Deckel um andere Winkel als 180° um die vertikale Achse gedreht werden kann, um von der Konfiguration zur Fluoreszenzmessung zur Konfiguration der Absorptionsmessung umzuschalten.

Wie bereits in der ersten Ausführungsform der Figuren 3A und 3B kann auch bei der Ausführungsform der Figur 4A und 4B die Lichtaustrittsöffnung unter 90° zur Lichteinfallsöffnung im Gehäuse der Analysevorrichtung 1 angeordnet werden (Figur 5A), wobei sich die Vorrichtung 100 dann zum Einsetzen in herkömmliche Fluoreszenzmessgeräte eignet. Alternativ kann die Lichtaustrittsöffnung 6' auch unter 180°, das heißt fluchtend mit der Lichteintrittsöffnung auf der gegenüberliegenden Seite des Gehäuses der Vorrichtung 100 angeordnet werden, so dass die Messungen von Fluoreszenz/Luminiszenz (Figur 4A) und Absorption (Figur 4B) in einem Fotometer oder Spektralfotometer durchgeführt werden kann (Figur 5B).

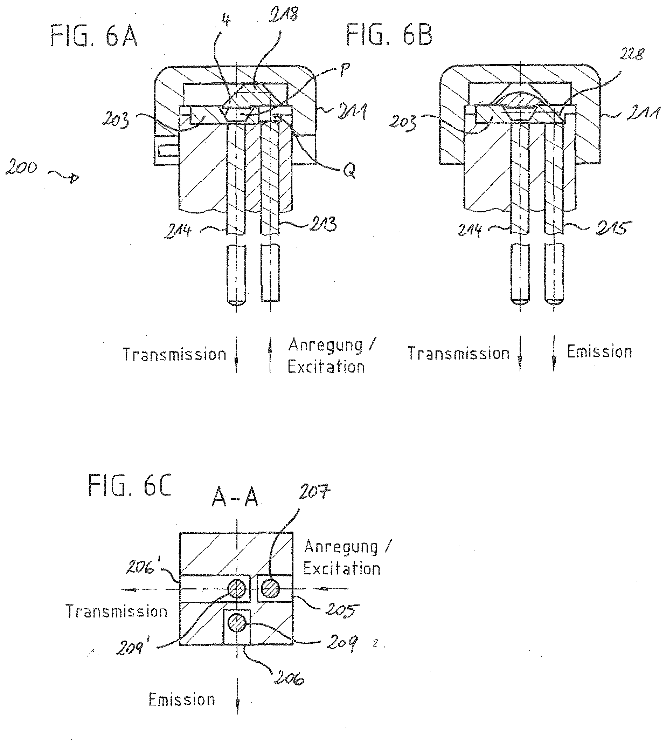

Figuren 6A bis 6C zeigen eine dritte Ausführungsform der vorliegenden Erfindung. Anzumerken ist, das nun Figuren 6A und 6B wieder wie die Figuren 1A und 1B um 90° gedrehte Schnittansichten darstellen. In dieser Ausführungsform umfasst die Analysevorrichtung 200, wie die erste und zweite Ausführungsform, einen Lichtleiter 213, der das Anregungslicht von der ersten Lichtumlenkung 207 neben die Probenaufnahme 4 führt. Über der Probenhalterung 203 befindet sich außermittig angeordnet ein Kegelstumpfprisma 218, das als zweite Lichtumlenkung ähnlich wie in der zweiten Ausführungsform das Anregungslicht so umlenkt, dass es vertikal in die Probenaufnahme 4 gelenkt und durch die Probe P transmittiert wird. Entsprechend ist entlang der vertikalen Achse der Vorrichtung 200 wieder ein Lichtleiter 214 vorgesehen, der (wie im Betriebsmodus der Figur 4B der zweiten Ausführungsform) das die Absorptionssignatur führende transmittierte Licht vertikal nach unten führt. Dort wird es von einer zweiten detektorseitigen Lichtumlenkung 209' in die Horizontale umgelenkt und durch eine Lichtaustrittsöffnung 206', die fluchtend mit der Lichteintrittsöffnung 205 auf der dieser gegenüberliegenden Seite des Gehäuses angeordnet ist, aus der Analysevorrichtung 200 ausgekoppelt,

Gleichzeitig umfasst in dieser Ausführungsform die Probenhalterung 203 aber an einer Seitenwand als dritte Lichtumlenkung eine Abschrägung 228, die sich an einer Position befindet, die um 90° gedreht zu der Position angeordnet ist, zu welcher das von der ersten Lichtumlenkung kommende Anregungslicht durch den Lichtleiter 213 neben die Probenaufnahme 4 geführt wird (siehe Figuren 6B und 6C). Diese Abschrägung 228 befindet sich ebenfalls seitlich neben der Probenaufnahme 4 auf demselben horizontalen Niveau wie diese und dient dazu, die in der Probe durch den vertikal durch sie hindurchtretenden Anregungslichtstrahl entstehende Fluoreszenz, die im Wesentlichen unter 90° zum Anregungslichtstrahl in der Probe in die Horizontale emittiert wird, durch Totalreflexion im Probenhalter 203 vertikal nach unten zu reflektieren. Dieses Fluoreszenzlicht tritt aus dem Probenhalter 203 senkrecht durch dessen untere Begrenzungsfläche aus und in einen dritten Lichtleiter 215 ein, welcher die Fluoreszenzemission nach unten zu einer zweiten detektorseitigen Lichtumlenkung 209 führt, die die Fluoreszenzemissionsstrahlung in die Horizontale umlenkt und durch eine Lichtaustrittsöffnung 206 auskoppelt. Diese Lichtaustrittsöffnung 206 ist wiederum unter 90° zur Lichteintrittsöffnung angeordnet, wie es für Fluoreszenzmessungen zweckmäßig ist. Die dritte Lichtumlenkung ebenso wie die erste bzw. zweite detektorseitige Lichtumlenkung dieser Ausführungsform können wiederum durch Umlenkprismen, Spiegel oder andere geeignete Licht umlenkende Elemente dargestellt werden.

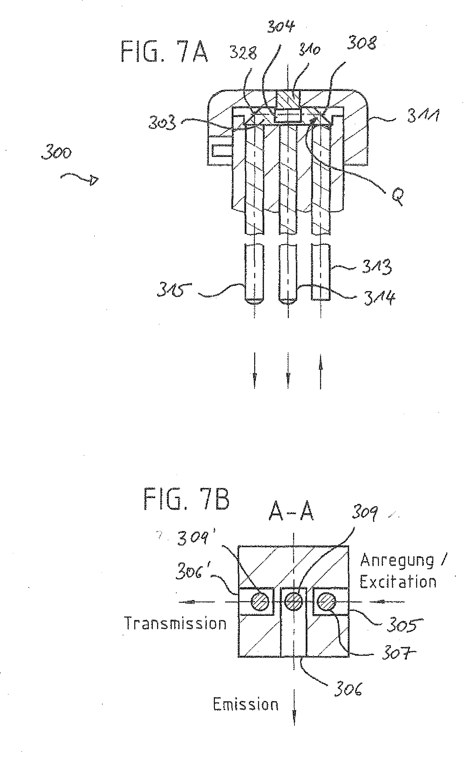

Figuren 7A und 7B zeigen eine vierte Ausführungsform der vorliegenden Erfindung. Diese Ausführungsform zeigt eine Variante der dritten Ausführungsform, bei der die Probenhalterung 303 zwei an gegenüberliegenden Begrenzungsseiten befindliche Abschrägungen 308, 328 aufweist. Die in der Figur 7A rechts dargestellte Abschrägung 308 dient dabei wie zuvor in der ersten Ausführungsform der Totalreflexion des durch einen Lichtleiter 313 zugeführten Anregungslichts und lenkt diesen Anregungslichtstrahl horizontal zur Probenaufnahme 4 und durch die Probe P hindurch. Die dadurch in der Probe angeregte Fluoreszenz/Luminiszenz wird wieder unter 90° durch einen Lichtleiter 314 erfasst und vertikal nach unten zu einer ersten detektorseitigen Lichtumlenkung 309 geführt. Der durch die Probe horizontal durchgetretene Anregungslichtstrahl wird weiter in der Probenhalterung zur zweiten Abschrägung 328 geführt, die den nun mit der Absorptionssignatur versehenen transmittierten Lichtstrahl ebenfalls vertikal nach unten ablenkt und in einen Lichtleiter 315 einkoppelt. Dieser führt das transmittierte Licht zu einer zweiten detektorseitigen Lichtumlenkung 309'. Die erste detektorseitige Lichtumlenkung 309 lenkt den Lichtstrahl mit dem Fluoreszenzsignal horizontal durch eine Lichtaustrittsöffnung 306, die unter 90° zur Richtung des Anregungslichtstrahls und der Lichteintrittsöffnung 305 angeordnet ist. Die zweite detektorseitige Lichtumlenkung 309' hingegen lenkt den transmittierten Lichtstrahl (Absorptionsspektrum) horizontal durch eine gegenüber der Lichteintrittsöffnung 305 angeordnete Lichtaustrittsöffnung 306'.

Somit können die dritte und vierte Ausführungsform der Analysevorrichtung 200 bzw. 300 je nach Bedarf für die Analyse des transmittierten Lichts (Absorption) oder des emittierten Lichts (Fluoreszenz, Luminiszenz, Raman-Streuung etc.) in den entsprechenden Messgeräten eingesetzt werden, ohne Änderungen an der Analysevorrichtung, zum Beispiel Drehen des Deckels, vornehmen zu müssen.

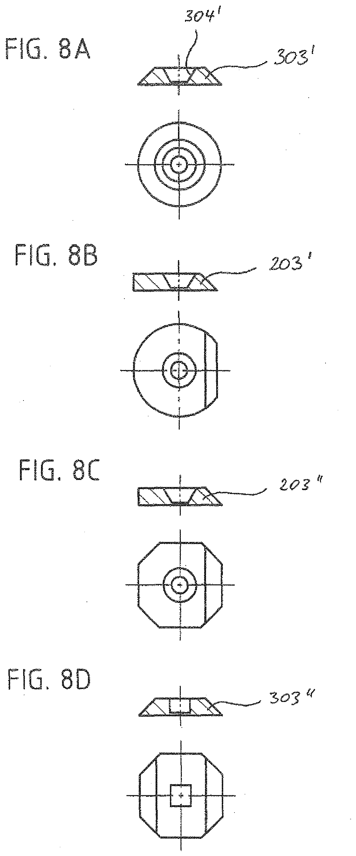

Die Figuren 8A bis 8D schließlich zeigen bauliche Varianten der erfindungsgemäßen Probeaufnahme, wobei die Figur 8A eine für die vierte Ausführungsform geeignete alternative Probenaufnahme 303' mit näpfchenartiger Probenaufnahmestelle 304' anstatt einer zylindrischen in Seitenansicht und Draufsicht zeigt, die Figur 8B eine für die dritte Ausführungsform geeignete Probenaufnahme 203' zeigt. Diese beiden Varianten besitzen jeweils einen runden Querschnitt. In den Figuren 8C und 8D sind hingegen achteckig im Querschnitt geformte Probenaufnahmen 203" und 303" dargestellt, wobei die Figur 8C wiederum für die dritte Ausführungsform geeignet ist und eine näpfchenartige Vertiefung aufweist, während die Probenaufnahme der Figur 8D eine für die vierte Ausführungsform geeignete Probenaufnahme aufweist.

Es ist zu verstehen, dass bei den oben beschriebenen Ausführungsformen der horizontale Querschnitt entlang der Linie A-A nicht notwendigerweise quadratisch geformt sein muss, sondern auch andere Formen, wie beispielsweise achteckig oder rund sein kann, je nach den Erfordernissen der Aufnahmen in den jeweiligen Messgeräten. So besitzt die Analysevorrichtung bevorzugt die Außenabmessungen einer in ein Fotometer, Spektralfotometer, Fluorimeter oder Spektralfluorimeter passend einsetzbaren, von deren Licht beaufschlagbaren Küvette. Das Außenmass des Querschnitts der Analysevorrichtung entspricht also beispielsweise dem einer Standardküvette und beträgt insbesondere 12,5 mm x 12,5 mm, weil die Mehrzahl von Fotometern oder dergleichen Messgeräte für derartige Abmessungen ausgebildet sind. Die in dem Inneren der Analysevorrichtung angeordneten Einrichtungen zur Lichtzuleitung oder Lichtumlenkung sind hierzu zweckmäßig an der Stelle der Analysevorrichtung angeordnet, an welcher bei üblichen Küvetten Eintritts- und Austrittsfenster für das zur Messung dienende Licht vorgesehen sind, wobei die erste Lichtumlenkung das von dem Fotometer oder dergleichen eingestrahlte Licht zu der Probenaufnahmestelle umlenkt und die detektorseitigen Lichtumlenkung(en) das von der Probenaufnahmestelle zurückkommende Licht zu dem Detektor umlenkt. Durch eine geschickte Wahl der Abmessungen der erfindungsgemäßen Analysevorrichtung kann diese somit in die gängigen Fotometer, Spektralfotometer, Fluorimeter oder Spektralfluorimeter eingesetzt werden, um dort zur Messung auch mengenmäßig sehr kleiner Proben eines Mediums dienen zu können.

Ebenfalls ist zu verstehen, dass in der obigen Beschreibung bei der Erfassung von Emissionsstrahlung unter 90° zur Anregungsstrahlung nicht sämtliche zu analysierenden Signaturen aufgeführt wurden, diese aber für den Fachmann verständlich sind. So wird beispielsweise auch die Raman-Streuung unter 90° zur einfallenden Anregungsstrahlung gemessen, ebenso wie Fluoreszenz oder Luminiszenz.

Die in den Abbildungen, wie auch in Erläuterungen getroffene Zuordnung von Anregungsstrahlung und Emissionsstrahlung zu Komponenten, sowie die Ausrichtung der Strahlen stellt nur eine bevorzugte Zuordnung dar, durch die alle beschriebenen Vorteile nutzbar sind. Prinzipiell lässt sich die Analysevorrichtung auch umgekehrt betreiben.

### Gewerbliche Anwendbarkeit

Fluoreszenz für Kleinstvolumen kommt neben der UV/Vis Spektroskopie unter anderem in der Molekularbiologie zum Einsatz, da die hohe Messempfindlichkeit der Methode die Nachweisgrenze für Nukleinsäuren und Proteine signifikant absenkt (vom unteren ng/µl in den unteren pg/µl Bereich).

Darüber hinaus kann durch gezielte Auswahl der Fluoreszenzfarbstoffe, wie z.B. SYBR Green, eine Unterscheidung von Nukleinsäuren (dsDNA, ssDNA, RNA) durchgeführt werden, die mit Hilfe einer UV Messung bei 260nm alleine nicht möglich ist, da alle Nukleinsäuren exakt bei dieser Wellenlänge absorbieren.

Die Kombination von UV/Vis Spektroskopie und Fluoreszenz in einem Messkopf bringt dem Anwender erhebliches Einsparpotential durch einen niedrigere Investitionsbedarf und deutlich geringerem Platzverbrauch im Labor. Gleichzeitig muss der Anwender nur die Bedienung eines Gerätes erlernen, da er nun mit einem Messgerät beide Methoden optimal abdecken kann.

## Patentansprüche

1. Vorrichtung (100) für die Analyse, Fluoreszenzmessung, Luminiszenzmessung, Phosphoreszenzmessung, Messung der Raman-Streuung oder Absorptionsmessung an einer kleinen Menge, beispielsweise an einem Tropfen, einer flüssigen Probe (P) mit Hilfe von Licht, das durch die Probe (P) führbar ist und danach gemäß der genannten Messmethoden detektierbar oder analysierbar ist,
wobei die Vorrichtung (100) eine in Gebrauchsstellung obere Probenhalterung (103) mit einer Aufnahmestelle (4) zum Aufbringen oder Auftropfen der Probe (P) und einen in Gebrauchsstellung horizontal orientierten, unterhalb der Probenhalterung (103) befindlichen Lichteintritt (5) für Anregungslicht aufweist,
wobei die Vorrichtung eine im Strahlengang hinter dem Lichteintritt (5) befindliche erste Einrichtung (7) zur Umlenkung des Lichts nach oben an eine Position (Q) neben der Aufnahmestelle (4) sowie eine zweite Lichtumlenkung (108) aufweist, die den von unten kommenden Lichtstrahl in die zu analysierende Probe (P) hinein lenkt,
**dadurch gekennzeichnet, dass** zusätzlich eine alternative zweite Lichtumlenkung (118) zur Messung der Transmission vorgesehen ist, die geeignet ist, das Anregungslicht durch Mehrfach-Reflektion in die Aufnahmestelle (4) und vertikal durch die Probe (P) nach unten zu lenken..

2. Vorrichtung nach Anspruch 1, wobei die zweite Lichtumlenkung (108) und die alternative zweite Lichtumlenkung (118) in einen oben auf die Probenhalterung (103) aufsetzbaren Deckel (111) integriert sind, der so drehbar ausgelegt ist, dass zwischen der zweiten Lichtumlenkung (108) zur Messung der Fluoreszenz und der alternativen zweiten Lichtumlenkung (118) zur Messung der Transmission umgeschaltet werden kann.

3. Vorrichtung nach Anspruch 1 oder 2, wobei die Vorrichtung eine im Strahlengang unter der Aufnahmestelle (4) befindliche erste Detektor-Lichtumlenkung (9) aufweist, die geeignet ist, das von der Probe (P) kommende Signallicht in eine in Gebrauchstellung horizontale Richtung zu einem Detektor umzulenken.

4. Vorrichtung nach Anspruch 3, wobei ferner im Strahlengang nach der ersten Detektor-Lichtumlenkung (9) ein Lichtaustritt (6, 6') vorgesehen ist, dessen von der ersten Detektor-Lichtumlenkung definierte horizontale Richtung unter 90° zur Einfallsrichtung des Anregungslichts angeordnet ist oder mit der Einfallsrichtung des Anregungslichts fluchtend angeordnet ist.

5. Vorrichtung (200, 300) für die Analyse, Fluoreszenzmessung, Luminiszenzmessung, Phosphoreszenzmessung, Messung der Raman-Streuung oder Absorptionsmessung an einer kleinen Menge, beispielsweise an einem Tropfen, einer flüssigen Probe (P) mit Hilfe von Licht, das durch die Probe (P) führbar ist und danach gemäß der genannten Messmethoden detektierbar oder analysierbar ist,
wobei die Vorrichtung (200, 300) eine in Gebrauchsstellung obere Probenhalterung (203, 303) mit einer Aufnahmestelle (4, 304, 304') zum Aufbringen oder Auftropfen der Probe (P) und einen in Gebrauchsstellung horizontal orientierten, unterhalb der Probenhalterung (203, 303) befindlichen Lichteintritt (205, 305) für Anregungslicht aufweist,
wobei die Vorrichtung eine im Strahlengang hinter dem Lichteintritt (205, 305) befindliche erste Einrichtung (207, 307) zur Umlenkung des Lichts nach oben an eine Position (Q) neben der Aufnahmestelle (4, 304, 304') sowie eine zweite Lichtumlenkung (218, 308) aufweist, die den von unten kommenden Lichtstrahl in die zu analysierende Probe (P) hinein lenkt,
**dadurch gekennzeichnet, dass** ferner eine dritte Lichtumlenkung (228, 328) neben der Probenaufnahmestelle (4) vorgesehen ist, die geeignet ist, horizontal aus der Probe (P) kommendes Signallicht nach unten zu lenken,
dass die zweite Lichtumlenkung (218) geeignet ist, das von der ersten Lichtumlenkung (207) kommende Anregungslicht durch Mehrfach-Reflektion in die Aufnahmestelle (4) und vertikal durch die Probe nach unten zu lenken.

6. Vorrichtung nach Anspruch 5, wobei dritte Lichtumlenkung (228) in eine seitliche Begrenzung der Probenhalterung (203) integriert ist, welche die Probenhalterung unter rechtem Winkel zur genannten Position (Q) in horizontaler Richtung begrenzt.

7. Vorrichtung nach Anspruch 5, wobei die dritte Lichtumlenkung (328) in eine seitliche Begrenzung der Probenhalterung integriert ist, die der zweiten Lichtumlenkung (308) horizontal gegenüber angeordnet ist und geeignet ist, das von der zweiten Lichtumlenkung (308) kommende, durch die Probe (P) getretene Licht zur Messung der Transmission nach unten zu lenken.

8. Vorrichtung nach einem der Ansprüche 1 bis 4, wobei die Vorrichtung eine im Strahlengang unter der Aufnahmestelle (4) befindliche erste Detektor-Lichtumlenkung (9) aufweist, die geeignet ist, das von der Probe (P) kommende Signallicht in eine in Gebrauchstellung horizontale Richtung zu einem Detektor umzulenken.

9. Vorrichtung nach einem der Ansprüche 5 bis 7, wobei die Vorrichtung eine im Strahlengang unter der Aufnahmestelle (3, 203, 303) befindliche erste Detektor-Lichtumlenkung (9, 209', 309) aufweist, die geeignet ist, das von der Probe (P) kommende Signallicht in eine in Gebrauchstellung horizontale Richtung zu einem Detektor umzulenken, und eine im Strahlengang unter der dritten Lichtumlenkung (328) befindliche zweite Detektor-Lichtumlenkung (209, 309') aufweist, die geeignet ist, das von der Probe kommende und von der dritten Lichtumlenkung umgelenkte Signallicht in eine in Gebrauchstellung horizontale Richtung zu einem Detektor umzulenken.

10. Vorrichtung nach Anspruch 8, wobei ferner im Strahlengang nach der ersten Detektor-Lichtumlenkung (9) ein Lichtaustritt (6, 6') vorgesehen ist, dessen von der ersten Detektor-Lichtumlenkung definierte horizontale Richtung unter 90° zur Einfallsrichtung des Anregungslichts angeordnet ist oder mit der Einfallsrichtung des Anregungslichts fluchtend angeordnet ist.

11. Vorrichtung nach Anspruch 9, wobei ferner im Strahlengang nach der ersten Detektor-Lichtumlenkung (209', 309) ein erster Lichtaustritt (206, 306) vorgesehen ist, dessen von der ersten Detektor-Lichtumlenkung definierte horizontale Richtung unter 90° zur Einfallsrichtung des Anregungslichts oder mit der Einfallsrichtung des Anregungslichts fluchtend angeordnet ist, und
im Strahlengang nach der zweiten Detektor-Lichtumlenkung (209, 309') ein zweiter Lichtaustritt (206, 306') vorgesehen ist, dessen von der zweiten Detektor-Lichtumlenkung definierte horizontale Richtung im Gegensatz zum ersten Lichtaustritt (206', 306) mit der Einfallsrichtung des Anregungslichts fluchtend oder unter 90° zur Einfallsrichtung des Anregungslichts angeordnet ist.

12. Vorrichtung nach einem der Ansprüche 5 bis 7 oder 9 bis 11, wobei die zweite Lichtumlenkung (8, 308) an der Position (Q) neben der Aufnahmestelle (4) in die Probenhalterung (3, 303) integriert ist und geeignet ist, das Anregungslicht zur Anregung von Fluoreszenz horizontal in die Probe (P) zu lenken.

13. Vorrichtung nach Anspruch 12, wobei die zweite Lichtumlenkung (8, 308) in eine seitliche Begrenzung der Probenhalterung (3, 303) integriert ist und als eine das von der ersten Lichtumlenkung (7, 307) kommende Anregungslicht totalreflektierende Abschrägung (8, 308) der Probenhalterung ausgeführt ist.

14. Vorrichtung nach einem der Ansprüche 8 bis 11, wobei die erste Lichtumlenkung (7, 207, 307) einerseits und die erste bzw. zweite Detektor-Lichtumlenkung (9; 209', 309; 209, 309') andererseits auf demselben horizontalen Niveau angeordnet sind.

15. Vorrichtung nach einem der vorangehenden Ansprüche, wobei die Aufnahmestelle eine Vertiefung (4, 304, 304') in der Probenhalterung (3, 103, 203, 303) ist und bevorzugt nach oben abgeschlossen ist.

## Claims

1. Device (100) for the analysis, fluorescence measurement, luminescence measurement, phosphorescence measurement, measurement of the Raman scattering or absorption measurement of a small quantity, for example a drop, of a liquid sample (P) with the aid of light which can be guided through the sample (P) and can then be detected or analysed according to the aforementioned measuring methods, wherein the device (100) has a sample holder (103), positioned at the top in the position of use, with a receiving point (4) onto which the sample (P) is applied or dropped and a light inlet (5) for excitation light, oriented horizontally in the position of use, located below the sample holder (103), wherein the device has a first device (7), located in the beam path after the light inlet (5), to deflect the light upwards to a position (Q) next to the receiving point (4) as well as a second light deflection (108) which deflects the light beam coming from below into the sample (P) which is to be analysed, **characterised in that**, in addition, an alternative second light deflection (118) is provided in order to measure the transmission which is configured to deflect the excitation light downwards through multiple reflection into the receiving point (4) and vertically through the sample (P).

2. Device according to claim 1, wherein the second light deflection (108) and the alternative second light deflection (118) are integrated in a cover (111) which can be placed on top of the sample holder (103) and which is designed to be rotatable in such a way that it is possible to switch between the second light deflection (108) in order to measure the fluorescence and the alternative second light deflection (118) in order to measure the transmission.

3. Device according to claim 1 or 2, wherein the device has a first detector light deflection (9), located in the beam path below the receiving point (4), which is configured to deflect the signal light coming from the sample (P) in a horizontal direction, in the position of use, to a detector.

4. Device according to claim 3, wherein a light output (6, 6') is further provided in the beam path after the first detector light deflection (9), the horizontal direction of which, defined by the first detector light deflection, is arranged at 90° to the direction of incidence of the excitation light or is arranged in alignment with the direction of incidence of the excitation light.

5. Device (200,300) for the analysis, fluorescence measurement, luminescence measurement, phosphorescence measurement, measurement of the Raman scattering or absorption measurement of a small quantity, for example a drop, of a liquid sample (P) with the aid of light which can be guided through the sample (P) and can then be detected or analysed according to the aforementioned measuring methods, wherein the device (200, 300) has a sample holder (203, 303), positioned at the top in the position of use, with a receiving point (4, 304, 304') onto which the sample (P) is applied or dropped and a light inlet (205, 305) for excitation light, oriented horizontally in the position of use, located below the sample holder (203, 303),
wherein the device has a first device (207, 307), located in the beam path after the light inlet (205, 305), to deflect the light upwards to a position (Q) next to the receiving point (4, 304, 304') as well as a second light deflection (218, 308) which deflects the light beam coming from below into the sample (P) which is to be analysed, **characterised in that**, in addition, a third light deflection (228, 328) is provided next to the sample receiving point (4) which is configured to deflect the signal light coming horizontally from the sample (P) downwards,
that the second light deflection (218) is configured to deflect the excitation light coming from the first light deflection (207) downwards through multiple reflection into the receiving point (4) and vertically through the sample.

6. Device according to claim 5, wherein the third light deflection (228) is integrated in a lateral boundary of the sample holder (203) which limits the sample holder in a horizontal direction at a right angle to said position (Q).

7. Device according to claim 5, wherein the third light deflection (328) is integrated in a lateral boundary of the sample holder which is arranged horizontally opposite the second light deflection (308) and is configured to guide the light coming from the second light deflection (308) and passing through the sample (P) downwards in order to measure the transmission.

8. Device according to one of the claims 1 to 4, wherein the device has a first detector light deflection (9), located in the beam path below the receiving point (4), which is configured to deflect the signal light coming from the sample (P) in a horizontal direction, in the position of use, to a detector.

9. Device according to one of the claims 5 to 7, wherein the device has a first detector light deflection (9, 209', 309), located in the beam path below the receiving point (3, 203, 303), which is configured to deflect the signal light coming from the sample (P) in a horizontal direction, in the position of use, to a detector, and a second detector light deflection (209, 309'), located in the beam path below the third light deflection (328), which is configured to deflect the signal light coming from the sample and deflected by the third light deflection in a horizontal direction, in the position of use, to a detector.

10. Device according to claim 8, wherein a light output (6, 6') is further provided in the beam path after the first detector light deflection (9), the horizontal direction of which, defined by the first detector light deflection, is arranged at 90° to the direction of incidence of the excitation light or is arranged in alignment with the direction of incidence of the excitation light.

11. Device according to claim 9, wherein a first light output (206,306) is further provided in the beam path after the first detector light deflection (209', 309), the horizontal direction of which, defined by the first detector light deflection, is arranged at 90° to the direction of incidence of the excitation light or is arranged in alignment with the direction of incidence of the excitation light, and
a second light output (206, 306') is provided in the beam path after the second detector light deflection (209, 309'), the horizontal direction of which, defined by the second detector light deflection, is, in contrast to the first light output (206', 306), arranged in alignment with the direction of incidence of the excitation light or at 90° to the direction of incidence of the excitation light.

12. Device according to one of the claims 5 to 7 or 9 to 11, wherein the second light deflection (8, 308) is integrated in the sample holder (3, 303) at the position (Q) next to the receiving point (4) and is configured to guide the excitation light horizontally into the sample (P) in order to excite fluorescence.

13. Device according to claim 12, wherein the second light deflection (8, 308) is integrated in a lateral boundary of the sample holder (3, 303) and is configured as a bevel (8, 308) in the sample holder totally reflecting the excitation light coming from the first light deflection (7, 307).

14. Device according to one of the claims 8 to 11, wherein the first light deflection (7, 207, 307) on the one hand and the first or second detector light deflection (9; 209', 309; 209, 309') on the other hand are arranged on the same horizontal level.

15. Device according to one of the preceding claims, wherein the receiving point is a depression (4, 304, 304') in the sample holder (3, 103, 203, 303) and is preferably closed in an upwards direction.

## Revendications

1. Dispositif (100) pour l'analyse, la mesure de fluorescence, la mesure de luminescence, la mesure de phosphorescence, la mesure de diffusion Raman ou la mesure d'absorption sur une petite quantité, par exemple sur une goutte, d'un échantillon liquide (P) à l'aide de lumière qui peut être guidée à travers l'échantillon (P) et peut ensuite être détectée ou analysée selon les méthodes de mesure mentionnées,
dans lequel le dispositif (100) présente un support d'échantillon supérieur (103) en position d'utilisation avec un emplacement d'accueil (4) pour l'application ou le prélèvement de l'échantillon (P) et une entrée de lumière (5), orientée horizontalement en position d'utilisation, se trouvant en dessous du support d'échantillon (103), pour la lumière d'excitation,
dans lequel le dispositif présente un premier aménagement (7) se trouvant dans le trajet de faisceau derrière l'entrée de lumière (5) pour la déviation de la lumière vers le haut à une position (Q) à côté de l'emplacement d'accueil (4) ainsi qu'une deuxième déviation de lumière (108) qui conduit le faisceau lumineux provenant du bas dans l'échantillon (P) à analyser,
**caractérisé en ce qu'**une deuxième déviation de lumière alternative (118) est prévue en plus pour mesurer la transmission, laquelle est adaptée pour conduire la lumière d'excitation vers le bas par réflexion multiple dans l'emplacement d'accueil (4) et verticalement à travers l'échantillon (P).

2. Dispositif selon la revendication 1, dans lequel la deuxième déviation de lumière (108) et la deuxième déviation de lumière alternative (118) sont intégrées dans un couvercle (111) pouvant être placé au-dessus sur le support d'échantillon (103), qui est conçu pour pouvoir être rotatif, de sorte qu'il est possible de basculer entre la deuxième déviation de lumière (108) pour mesurer la fluorescence et la deuxième déviation de lumière alternative (118) pour mesurer la transmission.

3. Dispositif selon la revendication 1 ou 2, dans lequel le dispositif présente une première déviation de lumière de détecteur (9) se trouvant dans le trajet de faisceau en dessous de l'emplacement d'accueil (4), qui est adaptée pour dévier la lumière de signal provenant de l'échantillon (P) dans une direction horizontale en position d'utilisation vers un détecteur.

4. Dispositif selon la revendication 3, dans lequel dans le trajet de faisceau, après la première déviation de lumière de détecteur (9), est en outre prévue une sortie de lumière (6, 6') dont la direction horizontale définie par la première déviation de lumière de détecteur est agencée à en dessous de 90° par rapport à la direction d'incidence de la lumière d'excitation ou est agencée en alignement avec la direction d'incidence de la lumière d'excitation.

5. Dispositif (200, 300) pour l'analyse, la mesure de fluorescence, la mesure de luminescence, la mesure de phosphorescence, la mesure de diffusion Raman ou la mesure d'absorption sur une petite quantité, par exemple sur une goutte, d'un échantillon liquide (P) à l'aide de lumière qui peut être guidée à travers l'échantillon (P) et peut ensuite être détectée ou analysée selon les méthodes de mesure mentionnées,
dans lequel le dispositif (200, 300) présente un support d'échantillon supérieur (203, 303) en position d'utilisation avec un emplacement d'accueil (4, 304, 304') pour l'application ou le prélèvement de l'échantillon (P) et une entrée de lumière (205, 305), orientée horizontalement en position d'utilisation, se trouvant en dessous du support d'échantillon (203, 303), pour la lumière d'excitation,
dans lequel le dispositif présente un premier aménagement (207, 307) se trouvant dans le trajet de faisceau derrière l'entrée de lumière (205, 305) pour la déviation de la lumière vers le haut à une position (Q) à côté de l'emplacement d'accueil (4, 304, 304') et une deuxième déviation de lumière (218, 308) qui conduit le faisceau lumineux provenant du bas dans l'échantillon (P) à analyser,
**caractérisé en ce qu'**une troisième déviation de lumière (228, 328) est en outre prévue à côté de l'emplacement d'accueil d'échantillon (4), qui est adaptée pour conduire vers le bas de la lumière de signal provenant horizontalement de l'échantillon (P),
**en ce que** la deuxième déviation de lumière (218) est adaptée pour conduire vers le bas la lumière d'excitation provenant de la première déviation de lumière (207) par réflexion multiple dans l'emplacement d'accueil (4) et verticalement à travers l'échantillon.

6. Dispositif selon la revendication 5, dans lequel la troisième déviation de lumière (228) est intégrée dans une limite latérale du support d'échantillon (203), laquelle limite le support d'échantillon en dessous d'angle droit par rapport à la position (Q) mentionnée dans une direction horizontale.

7. Dispositif selon la revendication 5, dans lequel la troisième déviation de lumière (328) est intégrée dans une limite latérale du support d'échantillon, qui est agencée horizontalement en face de la deuxième déviation de lumière (308) et est adaptée pour conduire vers le bas la lumière provenant de la deuxième déviation de lumière (308) et traversant l'échantillon (P) pour mesurer la transmission.

8. Dispositif selon l'une quelconque des revendications 1 à 4, dans lequel le dispositif présente une première déviation de lumière de détecteur (9) se trouvant dans le trajet de faisceau en dessous de l'emplacement d'accueil (4), qui est adaptée pour dévier la lumière de signal provenant de l'échantillon (P) dans une direction horizontale en position d'utilisation vers un détecteur.

9. Dispositif selon l'une quelconque des revendications 5 à 7, dans lequel le dispositif présente une première déviation de lumière de détecteur (9, 209', 309) se trouvant dans le trajet de faisceau en dessous de l'emplacement d'accueil (3, 203, 303), qui est adaptée pour dévier la lumière de signal provenant de l'échantillon (P) dans une direction horizontale en position d'utilisation vers un détecteur, et présente une deuxième déviation de lumière de détecteur (209, 309') se trouvant dans le trajet de faisceau en dessous de la troisième déviation de lumière (328), qui est adaptée pour dévier la lumière de signal provenant de l'échantillon et déviée par la troisième déviation de lumière dans une direction horizontale en position d'utilisation vers un détecteur.

10. Dispositif selon la revendication 8, dans lequel dans le trajet de faisceau, après la première déviation de lumière de détecteur (9), est en outre prévue une sortie de lumière (6, 6') dont la direction horizontale définie par la première déviation de lumière de détecteur est agencée à en dessous de 90° par rapport à la direction d'incidence de la lumière d'excitation ou est agencée en alignement avec la direction d'incidence de la lumière d'excitation.

11. Dispositif selon la revendication 9, dans lequel dans le trajet de faisceau, après la première déviation de lumière de détecteur (209', 309), est en outre prévue une première sortie de lumière (206, 306) dont la direction horizontale définie par la première déviation de lumière de détecteur est agencée à en dessous de 90° par rapport à la direction d'incidence de la lumière d'excitation ou en alignement avec la direction d'incidence de la lumière d'excitation, et
dans le trajet de faisceau suivant la deuxième déviation de lumière de détecteur (209, 309'), une deuxième sortie de lumière (206, 306') est prévue, dont la direction horizontale définie par la deuxième déviation de lumière de détecteur, contrairement à la première sortie de lumière (206', 306), est agencée en alignement avec la direction d'incidence de la lumière d'excitation ou à en dessous de 90° par rapport à la direction d'incidence de la lumière d'excitation.

12. Dispositif selon l'une quelconque des revendications 5 à 7 ou 9 à 11, dans lequel la deuxième déviation de lumière (8, 308) à la position (Q) à côté de l'emplacement d'accueil (4) est intégrée dans le support d'échantillon (3, 303) et est adaptée pour conduire la lumière d'excitation horizontalement dans l'échantillon (P) pour stimuler la fluorescence.

13. Dispositif selon la revendication 12, dans lequel la deuxième déviation de lumière (8, 308) est intégrée dans une limite latérale du support d'échantillon (3, 303) et est exécutée comme un chanfrein (8, 308) du support d'échantillon réfléchissant totalement la lumière d'excitation provenant de la première déviation de lumière (7, 307).

14. Dispositif selon l'une quelconque des revendications 8 à 11, dans lequel la première déviation de lumière (7, 207, 307) d'une part, et la première ou deuxième déviation de lumière de détecteur (9 ; 209', 309 ; 209, 309'), d'autre part, sont agencées au même niveau horizontal.

15. Dispositif selon l'une quelconque des revendications précédentes, dans lequel l'emplacement d'accueil est un creux (4, 304, 304') dans le support d'échantillon (3, 103, 203, 303) et est de préférence clos vers le haut.
